# EUROPÄISCHE PATENTSCHRIFT

(11) **EP 0 921 859 B1**
(45) Veröffentlichungstag und Bekanntmachung des Hinweises auf die Patenterteilung: **23.10.2002**
(21) Anmeldenummer: 97936600.2
(22) Anmeldetag: 01.08.1997
(51) Int. Cl.: B03B 5/44, B03B 5/28, B29B 17/02

(54) **VERFAHREN ZUM TRENNEN VON KUNSTSTOFF-FRAKTIONEN GERINGER DICHTE**
PROCESS FOR SEPARATING LOW DENSITY PLASTIC FRACTIONS
PROCEDE DE SEPARATION DE FRACTIONS DE MATIERES PLASTIQUES DE FAIBLE MASSE VOLUMIQUE

(30) Priorität: 29.08.1996 DE 19634788; 02.07.1997 DE 19727961
(43) Veröffentlichungstag der Anmeldung: 16.06.1999
(73) Patentinhaber: F & P Sortiertechnik GmbH, 95028 Hof (DE)
(72) Erfinder: FIEDLSCHUSTER, Thomas, D-95028 Hof (DE); PILZ, Harald, D-09122 Chemnitz (DE)
(74) Vertreter: Schneider, Manfred
(86) Internationale Anmeldenummer: DE9701652
(87) Internationale Veröffentlichungsnummer: WO98008609

(56) Entgegenhaltungen:
- EP-A- 0 557 816
- EP-A- 0 599 167
- WO-A-92/22380
- DE-A- 2 900 666

## Beschreibung

Die Erfindung betrifft ein Verfahren zum Trennen von Kunststoff-Fraktionen geringer Dichte, insbesondere einer Dichte, die kleiner ist als 1 g/cm³, in einer Prozeßflüssigkeit, deren Dichte durch das Mischen von Komponenten mit unterschiedlicher Dichte einstellbar ist.
Die Erfindung betrifft auch ein Verfahren zur Wiederaufbereitung der Prozeßflüssigkeit.
Bei den gegenwärtig eingesetzten Verfahren zum Trennen von Kunststoff-Fraktionen, deren Dichte größer ist als 1,0 g/cm³, werden bestimmte Stoffe mit Wasser gemischt und dadurch unterschiedliche Auftriebs- oder Sink-Bedingungen eingestellt.
Für das Trennen von Kunststoffen mit einer Dichte, die kleiner ist als 1 g/cm³, werden gegenwärtig alkoholische Flüssigkeiten mit Wasser zu unterschiedlichen Teilen gemischt (Vgl. DE 29 00 666 C2). Mit derartigen Gemischen erreicht man Dichten der Prozeßflüssigkeit zwischen 0,9 g/cm³ und 1,0 g/cm³.

Bei diesen Mischungen ist der Anteil an Alkohol extrem hoch, der Flammpunkt befindet sich deutlich unter 100 °C, in der Regel weit unter 50 °C. Das entspricht den Gefahrenklassen I und II. Zur Gewährleistung der notwendigen Sicherheit sind nach den gültigen Verordnungen sehr aufwendige Maßnahmen zu treffen. Es muß einer sehr hohen Explosionsgefahr gerechnet werden.
Der Dampfdruck beträgt bei dieser Prozeßflüssigkeit bei 20 °C etwa 1 bar. Dieses Gemisch verflüchtigt sich schnell und setzt erhebliche Mengen toxischer Gase frei. Sehr aufwendige Sicherheitsvorkehrungen sind daher zum Schutz vor toxischen Gase zu treffen.
Die Stabilität der Dichte ist ungenügend. Es sind regelmäßig Kontrollen durchzuführen und entsprechende Komponenten der Mischung zuzugeben. Der technische Aufwand hierfür ist sehr hoch.
Die Alkoholmischungen sind zudem in erheblichem Maße wassergefährdend. Das Durchführen von Trennvorgängen mit derartigen Prozeßflüssigkeiten war wegen dieser problemvollen Anwendung industriell bisher nicht möglich.

Mit der EP 0 599 167 A1 wurde vorgeschlagen, eine Mischung aus Wasser und Butylglykol als Trennflüssigkeit mit einer Dichte unter 1,0 g/cm³ zu verwenden. Hiermit konnte man zwar durch den günstigeren Flammpunkt die Explosionsgefahr etwas reduzieren. Die übrigen Gefahrenquellen für das Bedienpersonal und für die Umwelt bleiben aber nach wie vor bestehen.

Es bieten sich zur Trennung insbesondere natürliche Öle an, die eine niedrige Dichte besitzen. Bei diesen natürlichen Ölen muß man jedoch eine hohe kinematische Viskosität in Kauf nehmen. Diese hohe Viskosität verzögert den Trennvorgang in einem solchen Maße, daß er ökonomisch nicht vertretbar ist.

Insbesondere aus den vorgenannten Gründen hat man das Trennen von Kunststoffen, insbesondere von Polypropylen (PP) und Polyethylen (PE), gegenwärtig nicht praktizieren können. Solche Kunststoffe werden zur Zeit hauptsächlich einer rohstofflichen Verwertung zugeführt.

Eine werkstoffliche Verwertung als Kunststoff - PP bzw. PE - an sich ist wegen der o. a. Probleme der bekannten Trennverfahren gegenwärtig wenig praktikabel. Diesen geschilderten Mängeln abzuhelfen, ist das Ziel der vorliegenden Erfindung.
Die **Aufgabe der Erfindung** ist es, die Verfahren zur Trennung von Kunststoffen im Hinblick auf die verwendete Prozeßflüssigkeit so zu verbessern, daß dieses Verfahren ohne Gefahr von Explosionen und/oder Luft- und Wasservergiftungen bei geringsmöglichem Anlagenaufwand realisiert werden kann.
Die verwendete Prozeßflüssigkeit soll im maximal möglichen Umfang in den Prozeß zurückgeführt werden können.
Der Aufwand zur Aufbereitung der Prozeßflüssigkeit soll mit vorhandenen Ausrüstungen, die in einen kompletten Kreislauf eingefügt werden können, realisierbar sein.

Erfindungsgemäß wird diese Aufgabe durch die im Anspruch 1 definierte Prozeßflüssigkeit gelöst.

Das aus einer oder mehreren Komponenten bestehende synthetische Estergemisch kann in einer Dichte zwischen 0,86 g/cm³ und 0,96 g/cm³ bereitgestellt werden, die für die eingangs erwähnte Trennung von PE und PP von besonderer Bedeutung ist.
Die kinematische Viskosität von < 8 mm²/s bei 40 °C ist geeignet, die Trennung bei ausreichend hoher Geschwindigkeit vorzunehmen.
Der Flammpunkt dieser Prozeßflüssigkeit liegt über 150 °C und damit deutlich über 100 °C. Explosionsgefahr besteht nicht.
Der Dampfdruck liegt bei 20 °C unter 1 mbar. Regulierende Maßnahmen zur Stabilisierung der Dichte der Prozeßflüssigkeit können auf ein Minimum reduziert werden.
Vergiftungserscheinungen sind ausgeschlossen, weil die eingesetzten Medien nicht toxisch sind.
Diese genannten Esterkomponenten reagieren chemisch nicht miteinander.
Die erfindungsgemäße Prozeßflüssigkeit ist biologisch abbaubar und kann mit einfachen verfahrenstechnischen Mitteln wieder in den Prozeß zurückgeführt werden.
Sehr gute Ergebnisse wurden mit den in Anspruch 2 bezeichneten, spezifischen synthetischen Estern erreicht. Eine ausreichende Genauigkeit der eingestellten Dichte läßt sich durch das Mischen der Ester a) mit dem Ester d) erreichen.
Für das genaue Einstellen der Dichte in einem mittleren Dichtebereich kann man mit Vorteilen die Ester b) und c) verwenden.
Optimal hinsichtlich der niedrigen Viskosität arbeitet man mit Ester-Komponenten nach Anspruch 3.

Das in Anspruch 4 dargestellte Verfahren, zu einem Prozeß zum Wiederaufbereiten der Prozeßflüssigkeit, ist überaus einfach.
Gleiches trifft auf die zur Durchführung des Verfahrens zweckmäßige Anlage zu, die in Anspruch 5 definiert ist.

Die Erfindung soll nachstehend an einem Ausführungsbeispiel näher erläutert werden. Die dazugehörige Zeichnung zeigt einen schematischen Aufbau der Anlage zum Trennen von Kunststoff-Fraktionen.
Beim Trennen von Kunststoff-Fraktionen, hier nach dem Schwimm-Sink-Verfahren, wird stets in eine Leichtfraktion LF und in eine Schwerfraktion SF unterteilt. Die im vorliegenden Beispiel verwendete Trennvorrichtung 1 besteht aus einem Mischtrichter 11 mit einer Zuführung 74 von Prozeßflüssigkeit und einem zu trennenden Schnitzelgemisch F in einem oberen Zuführabschnitt.
Ein Speise-Ejektor 12 gibt am unteren Ausgang des Mischtrichters 11 zusätzliche Prozeßflüssigkeit zu und sorgt für das zuverlässige Entleeren des Mischtrichters 11 und für einen kontinuierlichen Transport des Gemisches in den Trennbehälter 13.
Im Trennbehälter 13 werden in definierten Strömungen die Leichtfraktion LF mit der Prozeßflüssigkeit nach oben und die Schwerfraktion SF mit einem anderen Teil der Prozeßflüssigkeit nach unten geführt.
Die nach unten geführte Schwerfraktion SF wird durch einen Förder-Ejektor 14 an der Unterseite des Trennbehälters 13 erfaßt und über ein Steigrohr zur Abnahmevorrichtung 15 am Pegel der Prozeßflüssigkeit geführt.
Die Leichtfraktion LF wird durch die Abnahmevorrichtung 16 direkt am oberen Ende des Trennbehälters 13 bereitgestellt.
Im vorliegenden Falle wird jede Fraktion LF, SF mit Prozeßflüssigkeit angereichert, durch die Abnahmevorrichtungen 15, 16 von der Trennvorrichtung 1 abgegeben. Der dem Trennprozeß nachfolgende Prozeß ist für jede Fraktion LF, SF im Prinzip gleich.
Der Verfahrensablauf für die Bereitstellung einer sauberen und trockenen Fraktion soll anhand der Schwerfraktion SF beschrieben werden.
Das Gemisch aus Schwerfraktion SF und Prozeßflüssigkeit wird durch die Abnahmevorrichtung 15 an der Trennvorrichtung 1 dargeboten.
Das Gemisch gelangt von der Trennvorrichtung über einen Schneckenförderer und eine nach unten geneigte Rohrleitung direkt in die erste Zentrifuge 4.
Dort wird bei hoher Drehzahl der zentralen Flügelwelle die Prozeßflüssigkeit abgeschleudert, gefiltert und über die Rohrleitung 42 zum Sammelbehälter 7 abgeführt.
Die noch mit Prozeßflüssigkeit benetzte Schwerfraktion SF wird, durch eine besondere Gestaltung der Zentrifuge, nahe der senkrechten Achse nach oben und dann tangential aus der Zentrifuge gefördert und vom Förderluftstrom getrennt.
Dieser, von der Prozeßflüssigkeit befreiten, Schwerfraktion wird auf dem Weg zu einer zweiten Zentrifuge 5 Wasser in großer Menge zugegeben.
In der Rohrleitung dorthin mischt sich Wasser mit der Schwerfraktion SF. Das Wasser löst die an der Schwerfraktion SF haftenden Partikel der Prozeßflüssigkeit.

In der zweiten Zentrifuge 5, die im Aufbau der ersten Zentrifuge weitgehend gleicht, wird das Wasser, in dem die Reste der Prozeßflüssigkeit mitgeführt werden, abgeschieden. Die saubere und trockene Schwerfraktion SF wird nach oben herausgefördert, vom Förderluftstrom getrennt und über entsprechende Förderelemente in Sammelbehältern für die weitere Verarbeitung bereitgestellt.

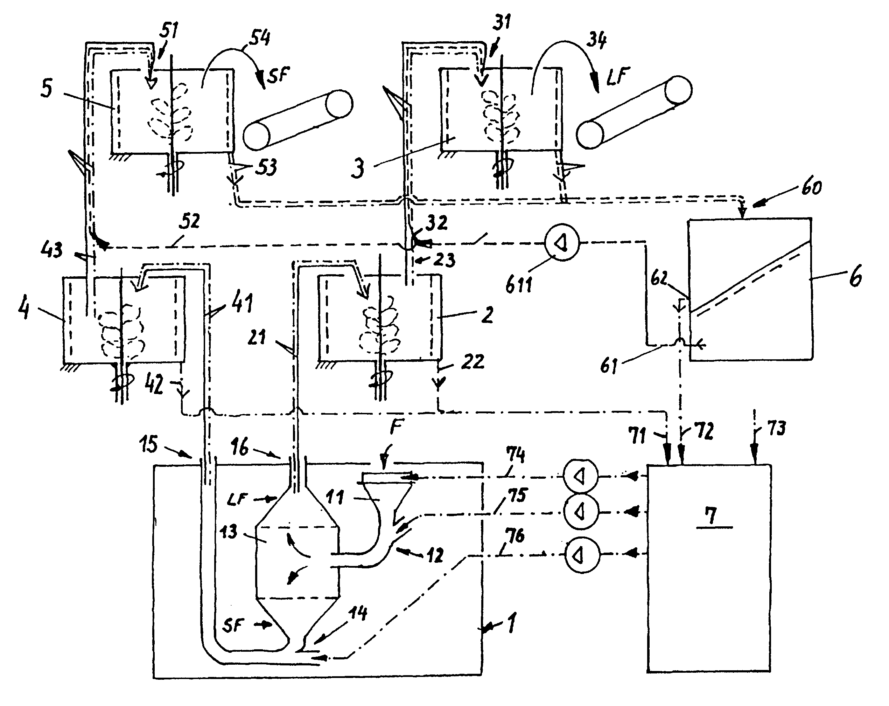

Der gleiche Pozeß läuft parallel dazu für die Leichtfraktion in den Zentrifugen 2 und 3 ab. Die jeweiligen Bestandteile dieser Zentrifugen unterscheiden sich in der Zeichnung nur durch die vorangestellte Ziffer der jeweiligen Zentrifuge.

Die aus den ersten Zentrifugen 2, 4 abgeführte Prozeßflüssigkeit wird direkt gesammelt und dem Trennprozeß über den Sammelbehälter 7 bei 71 wieder zugeführt.
Das Gemisch aus Wasser und den darin gelösten Resten der Prozeßflüssigkeit, das an den zweiten Zentrifugen 3, 5 bei 33 und 53 abgeschieden wird, wird über eine Rohrleitung 60 einem üblichen Ölabscheider 6 zugeführt.
Am Ölabscheider 6 wird die Prozeßflüssigkeit an einer ersten Position bei 62 abgenommen und dem Speicher 7 für die Prozeßflüssigkeit zugeführt.
Das gereinigte Wasser wird mittels Pumpe 611 über die Leitung 61 abgesaugt und über eine Art von Ejektoren an den Leitungen 23, 43 erneut in den Prozeß an der zweiten Zentrifuge 3, 5 zurückgeführt.

Die im Bereich der ersten Zentrifugen 2, 4 freigesetzte Prozeßflüssigkeit gelangt direkt in den Sammelbehälter 7 für die Prozeßflüssigkeit.

Es bleibt dem Anwender der Anlage überlassen, an einer geeigneten Stelle zusätzliche Filteranlagen zu installieren.
Nach einer vereinfachten Darstellung wird die Prozeßflüssigkeit über gesteuert angetriebene Pumpen und die Leitungen 74, 75, 76 den einzelnen Prozeßstufen 11, 12, 14 in der Trennanlage 1 zugeführt. Die Prozeßflüssigkeit steht wieder für den Trennprozeß zur Verfügung.

Die für diesen Prozeß vorgeschlagene Prozeßflüssigkeit ist ein synthetisches Ester oder ein Gemisch aus synthetischen Estern, dessen Dichte zwischen 0,86 g/cm³ und 0,96 g/cm³ einstellbar ist.
Als hierfür einsetzbar haben sich insbesondere Ester der folgenden Gruppen erwiesen:
a) ein Palmitatester (mit einer mittleren Dichte von 0,86 g/cm³)
b) ein Ester eines Fettsäuregemisches (mit einer mittleren Dichte von 0,88 g/cm³)
c) ein Fettsäuremethylester (mit einer mittleren Dichte von 0,93 g/cm³) und
d) ein Dicarbonsäureester (mit einer mittleren Dichte von 0,96 g/cm³).
Ester dieser Gruppen lassen sich in beliebiger Weise zusammenstellen und mischen.
Die angegeben en Dichte-Mittelwerte bezeichnen Mittelwerte der jeweiligen Gruppe. Sie können beim jeweiligen spezifischen, verwendeten Ester um etwa +/- 0,04 g/cm³ von diesem Mittelwert abweichen.
Benötigt man eine Dichte im Bereich der Werte eines spezifischen Esters einer dieser Gruppen, dann reicht es in der Regel aus, nur den dort angesiedelten Ester mit seinem jeweiligen Wert einzusetzen.

Für die Korrektur mehr oder weniger abweichender Werte setzt man zweckmäßigerweise einen weiteren Ester als Komponente ein, dessen Dichte von dem Basiswert nach oben oder nach unten möglichst deutlich abweicht.
Die Art und Weise der Zusammenstellung dieser Ester bleibt dem Anwender überlassen. Sie reagieren chemisch nicht miteinander und lassen sich problemlos miteinander mischen. Das Gemisch wird ausreichend homogen, so daß die Auftriebs- und Sinkbedingungen für alle Kunststoffteilchen in dem Gemisch gleich sind.
Als Maßstab für die Wahl der jeweiligen Ester dient nicht allein die Dichte.
Von erheblicher Bedeutung ist auch das Merkmal der Viskosität. je niedriger die Viskosität - umso höher ist die Trenngeschwindigkeit.
Entscheidend für die Wahl einer bestimmten Gruppe von Estern können auch die Erstellungskosten sein.

Mit besonderem Vorteil wurden folgende speziellen Ester getestet. Die Zugehörigkeit zu der jeweiligen, vorn genannten Gruppe ist durch den vorangestellten Buchstaben gekennzeichnet:
a) Isopropylpalmitat mit einer Dichte von 0,86 g/cm³,
b) Methyloleat mit einer Dichte von 0,88 g/cm³,
c) Ethylhexyladipat mit einer Dichte von 0,93 g/cm³,
d) Dibutyladipat mit einer Dichte von 0,96 g/cm³.
Eine Prozeßflüssigkeit aus einem Gemisch von Isopropylpalmitat mit einer Dichte von 0,86 g/cm³ und von Dibutyladipat mit einer Dichte von 0,96 g/cm³ ist sehr einfach und genau einstellbar.

Durch die Wahl der jeweiligen Mengenanteile kann praktisch jede Dichte in dem genannten Bereich eingestellt werden. Beide Komponenten haben eine niedrige Viskosität. Der Trennvorgang kann mit relativ hoher Geschwindigkeit ablaufen.

Die Zahl der jeweils am Gemisch beteiligten Komponenten spielt keine Rolle. Entscheidend ist, daß die gewünschte Dichte tatsächlich erreicht wird und durch Zugabe weiterer Komponenten korrigierbar ist und daß die Vyskosität eine zügige Arbeitsweise gestattet.
Es hat sich als zweckmäßig erwiesen, für die Prozeßflüssigkeit eine Dichte zu wählen, die mindestens um 0,015 g/cm³ von der Dichte des aufschwimmenden oder absinkenden Kunststoffes abweicht.
Bei dieser Dichte wird eine Auftriebs- oder Absinkgeschwindigkeit realisiert, die den Trennvorgang ökonomisch macht.
Eine erhebliche Bedeutug für das rationelle Betreiben der Anlage hat - wie bereits erwähnt - auch die kinematische Viskosität der Prozeßflüssigkeit. Angestrebt wird eine sehr niedrige Viskosität. Die Viskosität soll bei einer Temperatur
von 40 °C kleiner sein als 8 mm²/s, vorzugsweise auch kleiner 4,5 mm²/s. Der letztgenannte Wert ist durch ein Gemisch aus Isopropylpalmitat und Dibutyladipat erreichbar.
Von entscheidender Bedeutung für die Ausstattung der Anlage und ihr stabiles Betreiben ist es, daß der Flammpunkt der eingesetzten Ester einen Wert deutlich über 100°C hat. Die Flammpunkte der vorn benannten Ester liegen oberhalb von 150°C. Es ist keine Explosionsgefahr vorhanden.

Die gewählten, synthetischen Ester bilden auch zusammen mit anderen, im Prozeß vorhandenen Stoffen keine Verbindungen, die eine Explosionsgefahr verursachen. Nach den geltenden Vorschriften sind hierfür keine gesonderten Sicherheitsvorkehrungen zu treffen.
Der Dampfdruck ist bei diesen synthetischen Estern bei 20 °C kleiner als 1 mbar. Eine Verdunstung ist nahezu ausgeschlossen. Die Dichte der Prozeßflüssigkeit kann über lange Zeit stabil gehalten werden.
Toxische Einflüsse auf die Umwelt sind vollständig ausgeschlossen, weil die Ester an sich nicht toxisch sind. Besondere Sicherheitsvorkehrungen erübrigen sich.
Ein weiterer entscheidender Vorteil ist, daß sich ein Ester oder ein Estergemisch in Wasser nicht löst bzw. mit Wasser nur begrenzt mischbar ist.
Das Trennen von Wasser und Ester, insbesondere nach der zweiten Zentrifuge, vereinfacht sich durch diese Eigenschaft in erheblicher Weise.

Bei der Verwendung der bezeichneten Ester in dem vorn geschilderten Prozeß gibt es mit keinem der beteiligten Stoffe gefährliche Reaktionen oder das Entstehen von Zersetzungsprodukten, die als gefährlich eingestuft werden könnten. Eine primäre Reizwirkung war bei Verwendung dieser genannten Ester ist nicht festzustellen.
Die synthetischen Ester sind biologisch abbaubar und gelten im allgemeinen nicht als wassergefährdend. Diese Ester oder Estergemische sind kein Gefahrengut nach geltenden Gesetzen.

Aus der Verwendung der synthetischen Ester als Prozeßflüssigkeit ergeben sich keine arbeitsplatzbezogen, zu überwachenden Grenzwerte.

Die Prozeßflüssigkeit reagiert auch nicht mit den üblicherweise zu trennenden Kunststoffen, so daß diese mit ihren ursprünglichen Eigenschaften - eine saubere Trennung vorausgesetzt - wieder der Verwertung zugeführt werden können.

Die in der Anlage verwendeten Geräte sind in der Mehrzahl Ausrüstungsgegenstände, die handelsüblich sind. Die Trennanlage 1 nach dem Ausführungsbeispiel ist im einzelnen in der DE-Patentanmeldung 196 32 494.7 beschrieben.
Für das Austragen der Leichtfraktion und Schwerfraktion sind bei dieser Trennvorrichtung Förderspiralen vorgesehen, die einen ersten Teil der Prozeßflüssigkeit bereits wieder in den Kreislauf zurückführen können.

Ein großer Teil der Prozeßflüssigkeit wird jedoch durch diese Förderschnecke über die Eintragsöffnung der ersten Zentrifuge gefördert und von dieser Position aus, unter Wirkung der Schwerkraft, in die Zentrifugen 2 bzw. 4 eingeführt.
Die verwendeten Zentrifugen sind als sog. "Wenz-Zentrifugen" bekannt und werden u. a. von der Firma S & L in Nettethal angeboten.
Das charakteristische dieser Zentrifugen ist, daß sie die Feststoffe aus großen Flüssigkeitsmengen entfernen. Für das Austragen der Feststoffe sind im Inneren der Zentrifuge rotierende, schneckenförmig angeordnete Flügel vorgesehen, die die von Flüssigkeit getrennten Feststoffe nach oben herausfördern.

Die Flüssigkeit wird nach außen weggeschleudert und über die äußere Siebanordnung und den feststehenden Zentrifugenmantel gesammelt und nach unten abgeführt.
Die Feststoffe dagegen werden durch eine bestimmte Flügelgestaltung in einem zentral nach oben geführten Luftstrom mitgerissen.
Für das Trennen der Feststoffe aus diesem nach oben führenden Luftstrom ist ein Zyklon vorgesehen, der oben tangential mit dem Luft-Feststoff-Gemisch beschickt wird.
Die Luft wird im Zentum des Zyklons nach oben und die Feststoffe nach unten abgeführt. Nach dem ersten Zyklon der ersten Zentrifugen 2, 4 wird an der unteren Austragsöffnung dieser Zyklone für die Feststoffe ein Ejektor angefügt, dessen Medium das Wasser dieses Kreislaufes ist. Dieses Wasser übernimmt den Transport der Fraktionen zu den zweiten Zentrifugen 3, 5. Zur Sicherung einer zuverlässigen Zuführung dieses Gemisches zu den zweiten Zentrifugen 3, 5 ist es sinnvoll, die zweiten Zentrifugen 3, 5 tiefer anzuordnen als die erste.
Die Zentrifugen bilden zusammen mit dem Zyklon eine Baueinheit und werden als komplette Aggregate auf dem Markt angeboten.
Der verwendete Ölabscheider ist ebenfalls handelsüblich und erfordert keine weiteren Modifikationen.
Der Transport von Feststoffen in Rohrleitungen zwischen der Trennanlage und der ersten Zentrifuge sowie zwischen der ersten Zentrifuge und der zweiten Zentrifuge erfolgt stets in einem mehr oder minder starken Flüssigkeitsstrom, der vorzugsweise durch ein Gefälle unterstützt wird.

### Bezugszeichenliste

- 1: Trennanlage
- 11: Mischtrichter
- 12: Speise-Ejektor
- 13: Trennbehälter
- 14: Förder-Ejektor
- 15: Abnahmevorrichtung Schwerfraktion + Prozeßflüssigkeit
- 16: Abnahmevorrichtung Leichtfraktion + Prozeßflüssigkeit

- 2: erste Zentrifuge
- 21: Zuleitung Leichtfraktion + Prozeßflüssigkeit
- 22: Rückführung Prozeßflüssigkeit
- 23: Abnahme Leichtfraktion (+ Reste Prozeßflüssigkeit)

- 3: zweite Zentrifuge
- 31: Zuleitung Leichtfraktion + Reste Prozeßflüssigkeit + Wasser
- 32: Zuleitung Wasser
- 33: Rückführung Wasser + Prozeßflüssigkeit-Reste
- 34: Abführung Leichtfraktion

- 4: erste Zentrifuge Schwerfraktion
- 41: Zuleitung Schwerfraktion + Prozeßflüssigkeit
- 42: Rückführung Prozeßflüssigkeit
- 43: Abnahme Schwerfraktion (+ Reste Prozeßflüssigkeit)

- 5: zweite Zentrifuge
- 51: Zuleitung Schwerfraktion + Reste Prozeßflüssigkeit + Wasser
- 52: Zuleitung Wasser
- 53: Rückführung Wasser + Prozeßflüssigkeit-Reste
- 54: Abführung Schwerfraktion

- 6: Ölabscheider
- 60: Zulauf Wasser + Reste Prozeßflüssigkeit
- 61: Abführung Wasser
- 611: Pumpe
- 62: Abführung Prozeßflüssigkeit

- 7: Sammelbehälter Prozeßflüssigkeit
- 71, 72, 73: Zuleitungen
- 74: Speiseleitung für Mischer
- 75: Speiseleitung für Speise-Ejektor
- 76: Speiseleitung für Förder-Ejektor

- LF: Leichtfraktion
- SF: Schwerfraktion

### Bedeutung der Linien:

- ―――――: Fraktionen
- ----------: Wasser
- _._._._.: Prozeßflüssigkeit

## Patentansprüche

1. Verfahren zum Trennen von Kunststoff-Fraktionen geringer Dichte, insbesondere einer Dichte, die kleiner ist als 1 g/cm³, in einer Prozeßflüssigkeit, deren Dichte durch das Mischen von Komponenten mit unterschiedlicher Dichte einstellbar ist,
**dadurch gekennzeichnet, daß**
die Prozeßflüssigkeit aus Komponenten unterschiedlicher Dichte gemischt wird, die mindestens einer der folgenden Gruppen synthetischer Ester angehören:
a) Palmitatester (Mittelwert der Dichte bei 0,86 g/cm³),
b) Ester eines Fettsäuregemisches (Mittelwert der Dichte bei 0,88 g/cm³),
c) Fettsäuremethylester (Mittelwert der Dichte bei 0,93 g/cm³),
d) Dicarbonsäureester (Mittewert der Dichte bei 0,96 g/cm³).

2. Verfahren nach Anspruch 1, **dadurch gekennzeichnet, daß**
die Prozeßflüssigkeit aus einem Gemisch von synthetischen Estern aus der folgenden Liste zusammengestellt wird:
a) Isopropylpalmitat mit einer Dichte von 0,86 g/cm³,
b) Methyloleat mit einer Dichte von 0,88 g/cm³,
c) Ethylhexyladipat mit einer Dichte von 0,93 g/cm³,
d) Dibutyladipat mit einer Dichte von 0,96 g/cm³.

3. Verfahren nach Anspruch 1 oder 2, **dadurch gekennzeichnet,**
**daß** die Prozeßflüssigkeit aus einem Gemisch
- von Isopropylpalmitat mit einer Dichte von 0,86 g/cm³ und
- von Dibutyladipat mit einer Dichte von 0,96 g/cm³ besteht.

4. Verfahren nach einem der Ansprüche 1 bis 3,
- mit einem Prozeß zur Wiederaufbereitung der Prozeßflüssigkeit nach dem Trennvorgang für Kunststoffschnitzel in Fraktionen (SF, LF) und
- mit einem Prozeß der Rückführung der Prozeßflüssigkeit in den Trennvorgang,
**dadurch gekennzeichnet,**
**daß** die getrennten Fraktionen (SF, LF) einzeln, jeweils mit einem erheblichen Teil an Prozeßflüssigkeit, je einer ersten Zentrifuge (2, 4) zugeführt werden,
**daß** die Fraktionen (SF, LF) in ihrer ersten Zentrifuge (2, 4) von der Prozeßflüssigkeit getrennt werden,
**daß** die Prozeßflüssigkeit von den ersten Zentrifugen (2, 4) direkt einem Sammelbehälter (7) für Prozeßflüssigkeit zugeführt wird,
**daß** die Fraktionen (SF, LF), wiederum getrennt voneinander, in einem Wasserstrom je einer zweiten Zentrifuge (3, 5) zugeführt werden,
**daß** in der zweiten Zentrifuge (3, 5) die Fraktionen (SF, LF) von dem Gemisch aus Wasser und den Resten der Prozeßflüssigkeit getrennt werden und sauber und trocken einem Sammler für die Weiterverarbeitung zugeführt werden und
**daß** das Gemisch aus Wasser und dem Rest der Prozeßflüssigkeit einem Ölabscheider (6) zugeleitet wird, von wo
- die Prozeßflüssigkeit zu ihrem Sammelbehälter (7) und
- das Wasser zu den Förderleitungen (23,43) zur zweiten Zentrifuge (3, 5) geführt wird.

5. Anlage zur Ausführung des Verfahrens nach Anspruch 4,
**dadurch gekennzeichnet, daß**
jeder Austragsvorrichtung (14, 15) einer Fraktion (SF, LF) an einer Trennanlage
- eine erste Zentrifuge (2, 4)
- - mit Zuleitung (21, 41) von einer Abnahme vorrichtung (14, 15) einer Fraktion (SF, LF) an der Trennanlage (1),
- - mit einer Ableitung (22, 42) für Prozeßflüssigkeit zum Sammelbehälter (7) für Prozeßflüssigkeit
- - mit einer Austragsvorrichtung (23, 43) für die Fraktion;
- eine zweite Zentrifuge (3, 5)
- - mit einer Zuleitung von der Austragsvorrichtung (23, 43) für die Fraktion der ersten Zentrifuge (2, 3), der eine Wasserzuleitung (32, 52) zugeordnet ist,
- - mit einer Austragsvorrichtung (34, 54) für die saubere und trockene Fraktion und
- - mit einer Ableitung für das mit den Resten der Prozeßflüssigkeit angereicherte Wasser, und
- einem Ölabscheider (6)
- - dessen Eingang (60) mit der Ableitung (33, 53) der zweiten Zentrifugen (3, 5) und
- - dessen Ausgänge (62, 61) einerseits mit dem Sammelbehälter (7) für die Prozeßflüssigkeit und andererseits mit der Leitungen (23, 43) für die Fraktionen (SF, LF) zwischen der ersten und zweiten Zentrifuge (4, 5; 2, 3) verbunden sind.

## Claims

1. Method for separating low-density plastic fractions, especially a density of less than 1 g/cm³, in a processing fluid the density of which can be adjusted by mixing components of various density,
**characterized in that**
the processing fluid is mixed from components of various densities which belong to at least one of the following groups of synthetic esters:
a) palmitate esters (mean density of 0.86 g/cm³)
b) esters of a fatty acid mixture (mean density of 0.88 g/cm³)
c) fatty acid methyl esters (mean density of 0.93 g/cm³)
d) dicarboxylic acid esters (mean density of 0.96 g/cm³)

2. Method according to Claim 1, **characterized in that**
the processing fluid is a mixture of synthetic esters composed from the following list:
a) isopropyl palmitate with a density of 0.86 g/cm³,
b) methyl oleate with a density of 0.88 g/cm³,
c) ethylhexyl adipate with a density of 0.93 g/cm³,
d) dibutyl adipate with a density of 0.96 g/cm³.

3. Method according to Claim 1 or 2, **characterized in**
**that** the processing fluid consists of a mixture of
- isopropyl palmitate with a density of 0.86g/cm³, and
- dibutyl adipate with a density of 0.96 g/cm³.

4. Method according to one of the Claims 1 through 3,
- with a process for recycling the processing fluid after the separation in fractions (SF, LF) process for plastic chips, and
- with a process for returning the processing fluid to the separation process,
**characterized in**
**that** the separated fractions (SF, LF), each with a considerable quantity of processing fluid, are supplied individually to a first centrifuge (2, 4),
**that** the fractions (SF, LF) are separated from the processing fluid in their respective first centrifuges (2, 4),
**that** the processing fluid is directly supplied from the first centrifuges (2, 4) to a collecting tank (7) for processing fluid,
**that** the fractions (SF, LF), again separated from each other, are supplied with a flow of water, each to a second centrifuge (3 ,5),
**that** the fractions (SF, LF) are separated by the second centrifuge (3, 5) from the mixture of water and residual processing fluid and are fed in clean and dry conditions to a collector for further processing, and
**that** the mixture of water and residual processing fluid is fed into an oil separator (6) from where
- the processing fluid is supplied to its collecting tank (7), and
- the water is supplied to the delivery pipes (23, 43) for the second centrifuge (3, 5).

5. Installation for carrying out the method according to Claim 4,
**characterized in that**
each discharging device (14, 15) of a fraction (SF, LF) on a separating apparatus is assigned to
- a first centrifuge (2, 4)
- - with a feed pipe (21, 41) from a discharging device (14, 15) of a fraction (SF, LF) on the separating apparatus (1),
- - with an outflow (22, 42) for feeding processing fluid to the processing fluid collecting tank (7),
- - with a discharging device (23, 43) for the fraction;
- a second centrifuge (3, 5)
- - with a feed pipe from the discharging device (23, 43) for the fraction of the first centrifuge (2, 3), to which a water-feed pipe (32, 52) is assigned,
- - with a discharging device (34, 54) for the clean and dry fraction, and
- - with an outflow for the water enriched with residues of processing fluid, and
- an oil separator (6)
- - whose inlet (60) is connected to the outflow (33, 53) of the second centrifuges (3, 5), and
- - whose outlets (62, 61) are connected, in the first instance, to the collecting tank (7) for processing fluid and, in the next, to the pipes (23 ,43) for feeding the fractions (SF, LF) between the first and second centrifuges (4, 5; 2, 3).

## Revendications

1. Procédé de séparation de fractions de matières plastiques de faible masse volumique, notamment d'une masse volumique qui est inférieure à 1 g/cm³, dans un liquide dont la masse volumique est réglable en mélangeant des constituants de différentes masses volumiques,
**caractérisé par le fait que**
le liquide utilisé pour le processus est obtenu d'un mélange à base de constituants de différentes masses volumiques, ces constituants comptant au moins parmi un des groupes d'ester synthétique suivants:
a) Ester de palmitate (valeur moyenne de la masse volumique: 0,86 g/cm³)
b) Ester d'un mélange d'acide gras (valeur moyenne de la masse volumique: 0,88 g/cm³)
c) Ester méthylique d'acide gras (valeur moyenne de la masse volumique: 0,93 g/cm³)
d) Ester d'acide dicarbonique (valeur moyenne de la masse volumique: 0,96 g/cm³)

2. Procédé selon la revendication 1, **caractérisé par le fait que**
le liquide utilisé pour le processus est composé des esters synthétiques suivants:
a) Isopropyl-palmitate d'une masse volumique de 0,86 g/cm³
b) Oléate de méthyle d'une masse volumique de 0,88 g/cm³
c) Adipate hexaéthylique d'une masse volumique de 0,93 g/cm³
d) Adipate de dibutyle d'une masse volumique de 0,96 g/cm³

3. Procédé selon les revendications 1 ou 2, **caractérisé par le fait**
**que** le liquide utilisé pour le processus est composé d'un mélange à base
- d'isopropyl-palmitate d'une masse volumique de 0,86 g/cm³ et
- d'adipate de dibutyle d'une masse volumique de 0,96 g/cm³.

4. Procédé selon les revendications 1 à 3,
- consistant en un processus qui permet de retraiter le liquide usé après la séparation des rognures de matière plastique en fractions (SF, LF) et
- consistant en un processus qui permet de réutiliser ce liquide pour l'opération de séparation,
**caractérisé par le fait**
**que** chacune des fractions séparées (SF, LF) est amenée, séparément et enrichie d'une partie importante du liquide, vers une première centrifugeuse (2, 4),
**que** les fractions (SF, LF) sont séparées, dans leur première centrifugeuse (2, 4), du liquide utilisé pour le processus,
**que**, à partir de ces premières centrifugeuses (2, 4), le liquide utilisé pour le processus est directement conduit vers un réservoir collecteur (7).
**que** les fractions (SF, LF), toujours séparées l'unes des autres, sont séparément amenées par un courant d'eau vers une deuxième centrifugeuse (3, 5 ),
**que**, dans cette deuxième centrifugeuse (3, 5), les fractions (SF, LF) sont d'abord séparées du mélange composé d'eau et de liquide résiduel, puis elles sont amenées, en état propre et sec, vers un réservoir collecteur afin d'assurer leur traitement ultérieur, et
**que** le mélange composé d'eau et de liquide résiduel est conduit vers un séparateur d'huile (6) d'où
- le liquide utilisé pour le processus est conduit vers son réservoir collecteur (7) et
- l'eau est transportée vers les conduites de refoulement (23, 43) et vers la deuxième centrifugeuse (3, 5).

5. Installation pour réaliser le procédé selon la revendication 4,
**caractérisé par le fait que**
à chaque dispositif d'extraction (14, 15) d'une fraction (SF, LF) de l'installation séparatrice est assignée une première centrifugeuse (2, 4) qui est munie
-- d'une conduite d'amenée (21, 42) partant d'un dispositif d'enlèvement (14, 15) d'une fraction (SF, LF) de l'installation séparatrice (1),
-- d'une dérivation (22, 42) conduisant le liquide utilisé pour le processus vers le réservoir collecteur (7),
une deuxième centrifugeuse (3, 5), celle-ci disposant
-- d'une conduite d'amenée partant d'un dispositif d'extraction (23, 43) pour la fraction de la première centrifugeuse (2, 3) qui, elle, est munie d'une conduite d'eau (32, 52),
-- d'un dispositif d'extraction (34, 54) pour la fraction propre et sèche et
-- d'une dérivation pour évacuer l'eau enrichie de liquide résiduel, et puis
il lui est assigné un séparateur d'huile (6)
-- dont l'entrée (60) est raccordée à la dérivation (33, 53) des deuxièmes centrifugeuses (3, 5) et
-- dont les sorties (62, 61) sont raccordées tant au réservoir collecteur (7) du liquide utilisé pour le processus qu'aux conduites (23, 43) pour les des fractions (SF, LF) situées entre la première et la deuxième centrifugeuse (4, 5; 2, 3).
